# EUROPÄISCHE PATENTSCHRIFT

(11) **EP 1 530 691 B1**
(45) Veröffentlichungstag und Bekanntmachung des Hinweises auf die Patenterteilung: **07.11.2007**
(21) Anmeldenummer: 03797224.7
(22) Anmeldetag: 05.08.2003
(51) Int. Cl.: F16H 55/17, F16H 55/08

(54) **GETRIEBEELEMENT UND KRAFTFAHRZEUGGETRIEBE**
GEARBOX ELEMENT AND MOTOR VEHICLE GEARBOX
ELEMENT DE TRANSMISSION ET TRANSMISSION DE VEHICULE

(30) Priorität: 21.08.2002 DE 10238233
(43) Veröffentlichungstag der Anmeldung: 18.05.2005
(73) Patentinhaber: DaimlerChrysler AG, 70327 Stuttgart (DE)
(72) Erfinder: SCHNITZER, Detlef, 73770 Denkendorf (DE)
(86) Internationale Anmeldenummer: PCT/EP2003/008626
(87) Internationale Veröffentlichungsnummer: WO 2004/027292

(56) Entgegenhaltungen:
- WO-A-01/39916
- DE-A- 4 429 546
- DE-A- 19 904 479
- FR-A- 317 511
- US-A- 2 457 942
- US-A- 4 986 800

## Beschreibung

Die Erfindung betrifft ein Getriebeelement nach dem Oberbegriff des Anspruchs 1 und ein Kraftfahrzeuggetriebe mit einem entsprechenden Getriebeelement.

Aus der DE 199 04 479 A1 ist ein gattungsbildendes Getriebeelement bzw. eine Vorgelegewelle für ein Kraftfahrzeuggetriebe bekannt. Die Vorgelegewelle weist eine erste angeformte Verzahnung für einen ersten Vorwärtsgetriebegang und eine zweite angeformte Verzahnung für einen Rückwärtsgetriebegang auf, wobei die Vorgelegewelle im Bereich der dem Rückwärtsgetriebegang zugeordneten Verzahnung einen kleineren Durchmesser aufweist, als im Bereich der dem Vorwärtsgetriebegang zugeordneten Verzahnung. Zwischen den Verzahnungen ist ein Bearbeitungsfreiraum vorgesehen, der die Verzahnungen voneinander trennt.

Der Erfindung liegt insbesondere die Aufgabe zugrunde, ein Getriebeelement mit erhöhter Steifigkeit bei gleichzeitig vorteilhafter Bauraumausnutzung bereitzustellen. Sie wird gemäß der Erfindung durch die Merkmale des Anspruchs 1 gelöst. Weitere Ausgestaltungen ergeben sich aus den Unteransprüchen.

Die Erfindung geht aus von einem Getriebeelement, insbesondere für ein Kraftfahrzeuggetriebe, mit zumindest einer ersten und einer zweiten angeformten Verzahnung für wenigstens zwei unterschiedliche Getriebegänge, insbesondere für einen Rückwärtsgetriebegang und einen ersten Vorwärtsgetriebegang.

Es wird vorgeschlagen, daß die Verzahnungen ineinander übergehend ausgeführt sind und unterschiedliche Module, d.h. unterschiedliche Verhältnisse zwischen Durchmesser und Zähnezahl aufweisen. Ein Zwischenraum zwischen den Verzahnungen wird vermieden, wodurch die Bauraumausnutzung verbessert und die Steifigkeit erhöht werden kann, und zwar insbesondere wenn die Verzahnungen kontinuierlich d.h. zumindest weitgehend stufenlos ineinander übergehend ausgeführt sind und Kerbwirkungen wenigstens weitgehend vermieden werden können. Außerdem können die Verzahnungen vorteilhaft in einer Aufspannung kostengünstig hergestellt werden, wodurch ferner ein besonders exaktes Verhältnis zwischen den Verzahnungen erreichbar ist.

Die Verzahnungen können dabei unterschiedliche Zähnezahlen aufweisen, und zwar kann insbesondere die eine Verzahnung eine Zähnezahl aufweisen, die das ganzzahlige Vielfache einer Zähnezahl der anderen Verzahnung bildet. Vorteilhaft besitzen die Verzahnungen jedoch die gleiche zähnezahl, wodurch diese besonders einfach und kostengünstig, insbesondere in einem kontinuierlichen Herstellprozeß, hergestellt werden können.

In einer weiteren Ausgestaltung wird vorgeschlagen, daß das Getriebeelement als Vorgelegewelle ausgebildet ist. Zusätzliche Bauteile, Montageaufwand und Kosten können eingespart werden. Denkbar ist jedoch auch, daß das Getriebeelement als Zahnrad ausgebildet ist, welches auf einer Achse oder auf einer Welle, insbesondere auf einer Vorgelegewelle, drehfest oder drehbar gelagert werden kann.

Ferner wird vorgeschlagen, daß die Verzahnung für den Rückwärtsgetriebegang ein kleineres Modul aufweist als die Verzahnung für den ersten Vorwärtsgetriebegang, wodurch komfortable Vorwärts- und Rückwärtsrangiergeschwindigkeiten erreicht werden können. Insbesondere kann vorteilhaft eine Rückwärtsgang-übersetzung erreicht werden, die langsamer/gleich bzw. größer/gleich einer Vorwärtsgangübersetzung eines ersten Vorwärtsgetriebegangs ist. Die Spreizung des Kraftfahrzeuggetriebes kann erhöht werden. Dies erhöht wiederum bei gleichem Bauraum und Gewicht die Leistungsfähigkeit des Kraftfahrzeuggetriebes.

Die erfindungsgemäße Lösung kann bei verschiedenen, dem Fachmann als geeignet erscheinenden Kraftfahrzeuggetrieben eingesetzt werden, besonders vorteilhaft jedoch bei Nutzkraftfahrzeuggetrieben, bei denen mit einer stabilen, platzsparenden Konstruktion Rückwärtsgangübersetzungen erreicht werden können, die vorteilhaft auf eine Rückwärtsfahrt mit Anhänger ausgelegt sind.

Sind die Verzahnungen durch einen Fräs- und durch einen Schleifvorgang hergestellt, kann insbesondere bei Verzahnungen für einen ersten Vorwärtsgetriebegang und für einen Rückwärtsgetriebegang und der dafür in der Regel erforderlichen Zähnezahl bzw. Zähnezahlen ein wirtschaftliches Herstellverfahren bei hoher Qualität erreicht werden. Es sind jedoch auch andere, dem Fachmann als sinnvoll erscheinende Herstellverfahren denkbar, beispielsweise können die Verzahnungen statt geschliffen geschabt werden.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

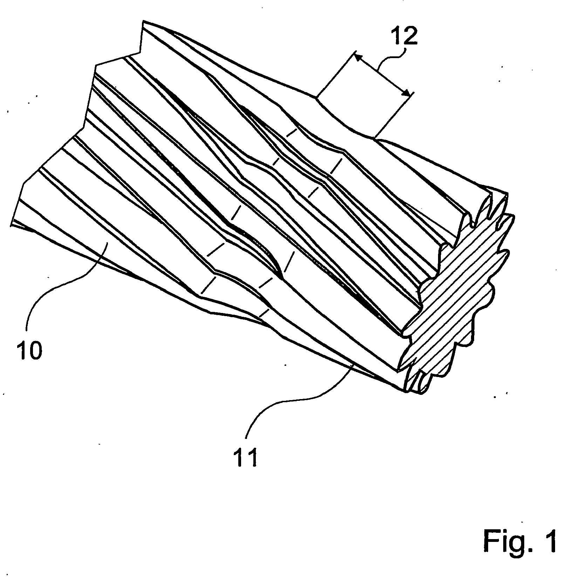

Figur 1 zeigt einen Ausschnitt eines als vorgelegewelle ausgebildeten Getriebeelements eines nicht näher dargestellten Nutzkraftfahrzeuggetriebes mit einer ersten und einer zweiten angeformten Verzahnung 10, 11 für einen Rückwärtsgetriebegang und einen ersten Vorwärtsgetriebegang.

Die Verzahnungen 10, 11 sind erfindungsgemäß kontinuierlich ineinander übergehend ausgeführt, und zwar verjüngt sich die Vorgelegewelle in einem Übergangsbereich 12 konisch bzw. stetig. Die Verzahnung 11 für den Rückwärtsgetriebegang weist ein kleineres Modul auf als die Verzahnung 10 für den ersten Vorwärtsgetriebegang, und zwar beträgt das Modul der dem Rückwärtsgetriebegang zugeordneten Verzahnung 11 ca. 4,73 und das Modul der dem ersten Vorwärtsgetriebegang zugeordneten Verzahnung 10 ca. 5,09. Die Verzahnungen 10, 11 weisen die gleiche Zähnezahl auf, wobei die Vorgelegewelle im Bereich der Verzahnung 11 für den Rückwärtsgetriebegang einen kleineren Durchmesser aufweist als im Bereich der Verzahnung 10 für den Vorwärtsgetriebegang.

Das Nutzkraftfahrzeuggetriebe weist eine Rückwärtsgangübersetzung auf, die langsamer ist als eine Vorwärtsgangübersetzung des ersten Vorwärtsgetriebegangs.

Die Verzahnungen 10, 11 sind in einer Aufspannung mit einem Fräsvorgang und einem anschließenden Schleifvorgang hergestellt.

## Patentansprüche

1. Getriebeelement, insbesondere für ein Kraftfahrzeuggetriebe, mit zumindest einer ersten und einer zweiten angeformten Verzahnung für wenigstens zwei unterschiedliche Getriebegänge, insbesondere für einen Rückwärtsgetriebegang und einen ersten Vorwärtsgetriebegang,
**dadurch gekennzeichnet,**
**daß** die Verzahnungen (10, 11) ineinander übergehend ausgeführt sind und unterschiedliche Module aufweisen.

2. Getriebeelement nach Anspruch 1,
**dadurch gekennzeichnet,**
**daß** die Verzahnungen (10, 11) kontinuierlich ineinander übergehend ausgeführt sind.

3. Getriebeelement nach Anspruch 1 oder 2,
**dadurch gekennzeichnet,**
**daß** die Verzahnungen (10, 11) die gleiche Zähnezahl aufweisen.

4. Getriebeelement nach einem der vorhergehenden Ansprüche,
**gekennzeichnet durch**
die Ausbildung als Vorgelegewelle.

5. Getriebeelement nach einem der vorhergehenden Ansprüche,
**dadurch gekennzeichnet,**
**daß** die Verzahnung (11) für den Rückwärtsgetriebegang ein kleineres Modul aufweist als die Verzahnung (10) für den ersten Vorwärtsgetriebegang.

6. Getriebeelement nach einem der vorhergehenden Ansprüche,
**dadurch gekennzeichnet,**
**daß** die Verzahnungen (10, 11) in einer Aufspannung hergestellt sind.

7. Getriebeelement nach einem der vorhergehenden Ansprüche,
**dadurch gekennzeichnet,**
**daß** die Verzahnungen (10, 11) durch einen Fräs- und durch einen Schleifvorgang hergestellt sind.

8. Kraftfahrzeuggetriebe mit einem Getriebeelement nach einem der vorhergehenden Ansprüche, wobei eine Rückwärtsgangübersetzung langsamer/gleich einer Vorwärtsgangübersetzung eines ersten Vorwärtsgetriebegangs ausgebildet ist.

## Claims

1. Transmission element, in particular for a motor vehicle transmission, having at least one first and one second integrally formed toothing for at least two different transmission inputs, in particular for a reverse transmission gear and a first forward transmission gear,
**characterized**
**in that** the toothings (10, 11) are designed so as to merge into one another and have different modules.

2. Transmission element according to Claim 1,
**characterized**
**in that** the toothings (10, 11) are designed so as to merge continuously into one another.

3. Transmission element according to Claim 1 or 2,
**characterized**
**in that** the toothings (10, 11) have the same number of teeth.

4. Transmission element according to one of the preceding claims,
**characterized by**
the embodiment as a countershaft.

5. Transmission element according to one of the preceding claims,
**characterized**
**in that** the toothing (11) for the reverse transmission gear has a smaller module than the toothing (10) for the first forward transmission gear.

6. Transmission element according to one of the preceding claims,
**characterized**
**in that** the toothings (10, 11) are produced in one chucking operation.

7. Transmission element according to one of the preceding claims,
**characterized**
**in that** the toothings (10, 11) are produced by means of a milling process and by means of a grinding process.

8. Motor vehicle transmission having a transmission element according to one of the preceding claims, with a reverse gear transmission ratio being designed to be slower than/equal to a forward gear transmission ratio of a first forward transmission gear.

## Revendications

1. Élément de transmission, en particulier pour une boîte de vitesses de véhicule automobile, comportant au moins une première et une deuxième denture formées sur ledit élément pour au moins deux rapports de vitesse différents, en particulier une marche arrière et une première vitesse de marche avant, **caractérisé en ce que** les dentures (10, 11) sont réalisées dans le prolongement l'une de l'autre et comportent des modules différents.

2. Élément de transmission selon la revendication 1, **caractérisé en ce que** les dentures (10, 11) se prolongent en continu l'une dans l'autre.

3. Élément de transmission selon la revendication 1 ou 2, **caractérisé en ce que** les dentures (10, 11) ont le même nombre de dents.

4. Élément de transmission selon l'une quelconque des revendications précédentes, **caractérisé par** la réalisation sous forme d'arbre intermédiaire.

5. Élément de transmission selon l'une quelconque des revendications précédentes, **caractérisé en ce que** la denture (11) pour la marche arrière comporte un module plus petit que la denture (10) pour la première vitesse de marche avant.

6. Élément de transmission selon l'une quelconque des revendications précédentes, **caractérisé en ce que** les dentures (10, 11) sont fabriquées dans un dispositif de serrage.

7. Élément de transmission selon l'une quelconque des revendications précédentes, **caractérisé en ce que** les dentures (10, 11) sont réalisées par un processus de fraisage et par un processus de meulage.

8. Boîte de vitesses pour véhicule automobile avec un élément de transmission selon l'une quelconque des revendications précédentes, dans laquelle un rapport de changement de vitesse en marche arrière est plus lent ou égal à un rapport de changement de vitesse d'une première vitesse de marche avant.
